# EUROPÄISCHE PATENTANMELDUNG

(11) **EP 0 764 611 A2**
(43) Veröffentlichungstag der Anmeldung: **26.03.1997**
(21) Anmeldenummer: 96114455.7
(22) Anmeldetag: 10.09.1996
(51) Int. Cl.: C02F 3/00, C02F 3/12

(54) **Kleinkläranlage für häusliche Abwässer**

(30) Priorität: 19.09.1995 DE 19534657
(71) Anmelder: Weise, Christian, 90475 Nürnberg (DE); Wohlleben, Karl, 90475 Nürnberg (DE)
(72) Erfinder: Weise, Christian, D-90475 Nürnberg (DE)
(74) Vertreter: Brose, Manfred, Dr.

(57) **Zusammenfassung**

Die Kleinkläranlage besteht aus einem Vorklärbehälter 2, einem Vorspeicherbehälter 4 und einem Klärbehälter 7. Wahlweise sind ein Speicherbehälter 11 für Klarwasser, eine Wasserdesinfektionsanlage 12 und eine Vorrichtung zur Trinkwassergewinnung 13 anschließbar. Der Vorspeicherbehälter 2 und der Klärbehälter 7 arbeiten im Aufstaubetrieb. Eine Überleitung von Abwasser aus dem Vorspeicherbehälter 2 in den Klärbehälter 7 ist nur möglich, wenn sich der Klärbehälter 7 in der Belüftungsphase befindet. Der Klärbehälter 7 vereinigt durch die zeitliche Trennung von Belüftungs- und Absetzphase einen Belüftungs- und einen Nachklärbehälter in sich. Eine niveaugesteuerte Steuerautomatik 71 steuert alle Betriebsabläufe der Kleinkläranlage. Oberirdische Aufstellung oder ebenerdiger Einbau sind ohne wesentliche bauliche Änderungen möglich. Die Kleinkläranlage ermöglicht bei stark wechselnden Belastungen einen wirksamen und betriebssicheren Einsatz.

## Beschreibung

Die Erfindung betrifft eine Kleinkläranlage für häusliche Abwässer, bestehend aus Vorklärbehälter, Vorspeicherbehälter und Klärbehälter.

Bekannte Kleinkläranlagen neigen bei stark schwankenden Zuflüssen und bei Betriebspausen zu kritischen Betriebszuständen.. Betriebssicherer ist eine Kleinkläranlage nach DE 42 35 540 A1. Deren Nachteil ist in der fehlenden Vorklärung zu sehen. Im praktischen Betrieb bildet sich Schwimmschlamm. Verstopfungs- und Verzopfungsgefahr ist die Folge.

Der Erfindung liegt daher die Aufgabe zugrunde, eine bei stark wechselnden Zuflüssen und bei Betriebspausen wirksam und betriebssicher arbeitende Kleinkläranlage zu schaffen.

Diese Aufgabe wird nach der Erfindung gelöst durch eine Kleinkläranlage, bestehend aus Vorklärbehälter, Vorspeicherbehälter und Klärbehälter. Der Vorklärbehälter hält grobe Schmutzstoffe zurück und gleicht Belastungsspitzen aus.
Der Vorspeicherbehälter arbeitet im Aufstaubetrieb. Eine Steuerautomatik sorgt dafür, daß nur dann Abwasser vom Vorspeicher in den Klärbehälter übergeleitet werden kann, wenn sich der Klärbehälter in der Belüftungsphase befindet. Die Abwasserüberleitung erfolgt wahlweise durch eine Pumpe oder einen motorisch betriebenen Auslaß.

Der Klärbehälter, welcher ebenfalls im Aufstaubetrieb arbeitet, vereinigt durch eine zeitliche Trennung (Steuerautomatik) Belüftungs- und Nachklärbehälter in sich. Die niveauabhängige Steuerautomatik steuert Belüftung und Umwälzung im Klärbehälter sowie die Ableitung von Klarwasser aus demselben. Das Klarwasser wird wahlweise durch eine Pumpe oder einen motorisch betriebenen Auslaß aus dem Klärbehälter entfernt.

Ohne wesentliche Änderungen ist die Anlage sowohl ebenerdig einbaufähig als auch oberirdisch aufstellbar. Bei oberirdischer Aufstellung übernimmt eine geeignete Pumpvorrichtung die Abwasserzufuhr in den Vorklärbehälter.

Der Klärbehälter ist vorbereitet zum wahlweisen Anschluß eines Speicherbehälters für abgeleitetes Klarwasser.

Für erhöhte Anforderungen an die Qualität des gespeicherten Klarwassers ist der Klarwasserspeicherbehälter mit einer Anschlußmöglichkeit für eine Wasserdesinfektionsanlage ausgestattet.

Bei sehr kleinen Zuflüssen ist die Gefahr von Kurzschlußströmungen im Klärbehälter während der Absetzsphase nahezu ausgeschlossen, der Vorspeicherbehälter wird in diesem Sonderfall weggelassen. Das Abwasser fließt unmittelbar vom Vorklärbehälter in den Klärbehälter.

Zusätzlich ist der Speicherbehälter für das abgepumpte Klarwasser zum Anschluß einer Trinkwassergewinnungsvorrichtung vorbereitet.

In den Zeichnungen ist ein Ausführungsbeispiel der Erfindung dargestellt. Es zeigen :

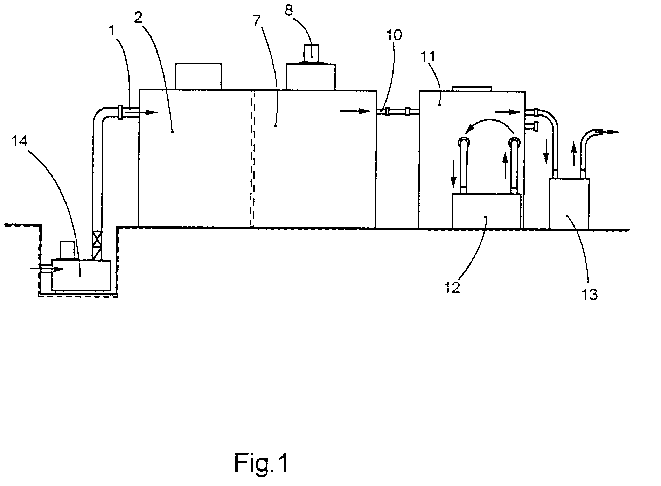

- Fig. 1: eine schematische Darstellung der Kleinkläranlage mit einem Speicherbehälter für Klarwasser, einer Wasserdesinfektionsanlage und einer Trinkwassergewinnungsvorrichtung in oberirdischer Aufstellung

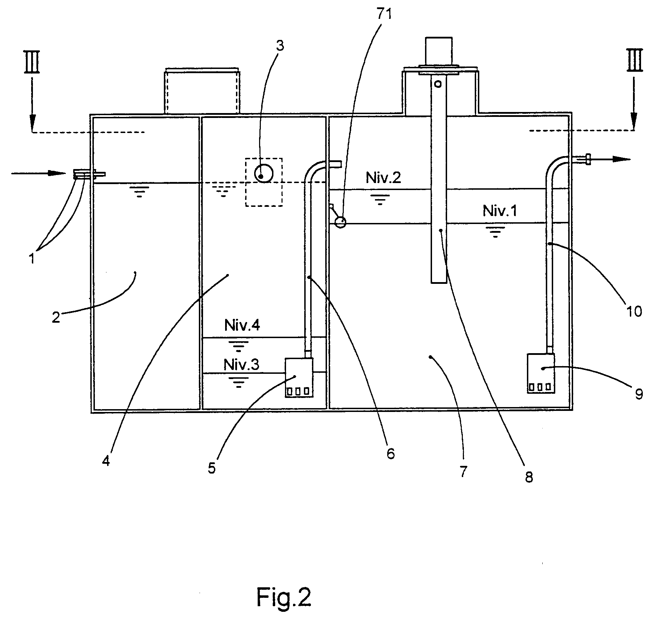

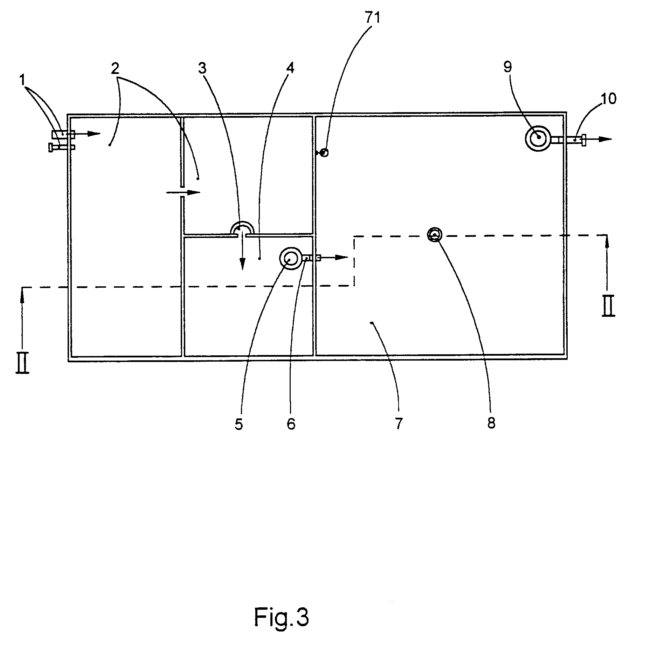

- Fig. 2: einen Schnitt durch die Kleinkläranlage nach der Linie II - II von Figur 3 und
- Fig. 3: einen Schnitt nach der Linie III - III von Fig. 2.

Bei der in den Zeichnungen dargestellten Kleinkläranlage fließt das Abwasser durch die Zulaufleitung 1, welche bei oberirdischer Aufstellung als Druckleitung ausgebildet ist, in den Vorklärbehälter 2. In diesen ist der Vorspeicherbehälter 4 integriert.

Über den tauchwandgesicherten überlauf 3 stürtzt das vorgeklärte Abwasser in den Vorspeicherbehälter 4. Dort staut es sich solange auf, bis die niveaugesteuerte Pumpe 5 bei "Niv. 4" einschaltet und bei "Niv.3 wieder ausschaltet und somit eine festgelegte Abwassermenge durch die Druckleitung 6 in den Klärbehälter 7 überpumpt.

Der Klärbehälter 7 arbeitet ebenfalls im Aufstaubetrieb. Das Abwasser wird durch die Belüftungs- und Umwälzvorrichtung 8 solange belüftet, bis durch die gleichzeitige Abwasserzufuhr ein festgelegter oberer Wasserstand "Niv.2" erreicht ist. Nun schaltet die Steuerautomatik 71 die Belüftungs- und Umwälzvorrichtung ab und die Absetzphase beginnt.

Die Pumpe 5 ist so geschaltet, daß nur dann Abwasser in den Klärbehälter 7 gefördert werden kann, wenn sich dieser in der Belüftungsphase befindet. Eine Kurzschlußströmung während der Absetzphase im Klärbehälter 7 ist daher ausgeschlossen.

Nach Ablauf der Absetzzeit schaltet die Steuerautomatik 71 die Pumpe 9 ein, welche das Klarwasser durch die Druckleitung 10 wahlweise etwa in ein Gewässer oder in einen an der Druckleitung angeschlossenen Speicherbehälter 11 für Klarwasser abpumpt. Sobald der untere Wasserstand "Niv.1" erreicht ist, schaltet die niveauabhängige Steuerautomatik die Pumpe 9 ab und die Belüftungs- und Umwälzvorrichtung 8 wieder ein. Alle Arbeitsabläufe beginnen wieder von vorn.

An den anschlußfertig vorbereiteten Speicherbehälter 11 für Klarwasser ist wahlweise eine Vorrichtung zur Wasserentkeimung 12 anschließbar, ebenso ist an weitere vorbereitete Anschlüsse wahlweise eine Vorrichtung 13 zur Trinkwassergewinnung ankoppelbar.

Bei oberirdischer Aufstellung der Anlage übernimmt eine geeignete Pumpvorrichtung 14 die Abwasserzufuhr in den Vorklärbehälter 2.

Beide Pumpen 5, 7 können bei geeigneten Niveaugegebenheiten durch motorbetriebene Auslaßventile ersetzt werden.

## Patentansprüche

1. Kleinkläranlage, insbesondere für häusliche Abwässer, bestehend aus einem Klärbehälter mit einer Umwälzvorrichtung und einer Belüftungsvorrichtung für das Abwasser, einer Pumpe zum Abpumpen des geklärten Abwassers und einer Steuerautomatik zur Steuerung von Umwälzvorrichtung, Belüftungsvorrichtung und Pumpe, gekennzeichnet durch einen Vorklärbehälter (2) und einen Vorspeicherbehälter (4) und die vom Abwasserniveau im Klärbehälter (7) gesteuerte Steuerautomatik (71).

2. Kleinkläranlage nach Anspruch 1, dadurch gekennzeichnet, daß Belüftung und Umwälzung im Klärbehälter (7) wahlweise durch eine kombinierte Vorrichtung (8) oder durch getrennte Vorrichtungen erfolgt.

3. Kleinkläranlage nach Anspruch 1 oder 2, dadurch gekennzeichnet, daß die durch eine Steuerautomatik (71) im Reaktor (7) und eine selbständige Niveausteuerung im Vorspeicherbehälter (4) gesteuerte Überleitung von Abwasser aus dem Vorspeicherbehälter (4) in den Klärbehälter (7) wahlweise durch eine Pumpe (5) oder ein motorgetriebenes Auslaßventil erfolgt.

4. Kleinkläranlage nach einem der Ansprüche 1 bis 3, dadurch gekennzeichnet, daß die Klarwasserableitung wahlweise durch eine Pumpe (9) oder ein motorgetriebenes Auslaßventil erfolgt.

5. Kleinkläranlage nach einem der Ansprüche 1 bis 4, dadurch gekennzeichnet, daß die Anlage gleichermaßen für ebenerdigen Einbau wie für oberirdische Aufstellung geeignet ist, wobei bei oberirdischer Aufstellung die Abwasserzufuhr in den Vorklärbehälter (2) durch eine Pumpvorrichtung (14) erfolgt.

6. Kleinkläranlage nach einem der Ansprüche 1 bis 5, gekennzeichnet durch einen Speicherbehälter (11) für das abgeleitete Klarwasser.

7. Kleinkläranlage nach einem der Ansprüche 1 bis 6, gekennzeichnet durch einen dem Speicherbehälter (11) nachgeschaltete Klarwasserdesinfektionsanlage (12), insbesondere für eine längere Lagerung des Klarwassers.

8. Kleinkläranlage nach einem der Ansprüche 1 bis 7, gekennzeichnet durch eine dem Speicherbehälter (11) nachgeschaltete Trinkwassergewinnungsanlage (13), insbesondere für wasserarme Gegenden.

9. Kleinkläranlage nach einem der Ansprüche 1 bis 8, dadurch gekennzeichnet, daß bei sehr kleinen Zuflüssen an Abwasser, der Vorspeicherbehälter (4) entfällt und das Abwasser vom Vorklärbehälter (2) unmittelbar in den Klärbehälter (7) fließt.

10. Verfahren zum Betrieb einer Kleinkläranlage nach den Ansprüchen 1 bis 9, dadurch gekennzeichnet, daß der Vorspeicherbehälter und der Klärbehälter im Aufstaubetrieb arbeiten, wobei aus dem mit einer selbsttätigen Niveausteuerung versehenen Vorspeicherbehälter bei Erreichen eines maximalen Niveaus und einer Freigabe durch die Steuerautomatik Abwasser in den Klärbehälter übergeleitet wird, der Klärbehälter in einer niveaugesteuerten Belüftungs- und Umwälzphase arbeitet, nach Erreichen eines maximalen Wasserniveaus die Belüftungs- und Umwälzphase beendet und eine durch die Steuerautomatik zeitlich gesteuerte Absetzphase bei gleichzeitiger Blockade der Überleitung von Abwasser aus dem Vorspeicherbehälter in den Klärbehälter beginnt, an deren Ende das geklärte Wasser bis zu einem minimalen Niveau abgeleitet, die Belüftungs- und Umwälzphase wieder eingeschaltet und die Möglichkeit der Überleitung von Abwasser aus dem Vorspeicherbehälter in den Klärbehälter freigegeben wird.
